# EUROPEAN PATENT SPECIFICATION

(11) **EP 2 024 215 B1**
(45) Date of publication and mention of the grant of the patent: **26.02.2014**
(21) Application number: 07747992.1
(22) Date of filing: 05.04.2007
(51) Int. Cl.: B60T 17/22, F15B 21/04

(54) **ARRANGEMENT FOR VENTING OF HYDRAULIC SYSTEM IN MOTOR VEHICLE**
ANORDNUNG ZUR ENTLÜFTUNG EINES HYDRAULIKSYSTEMS IN EINEM KRAFTFAHRZEUG
DISPOSITIF DE VENTILATION D'UN SYSTÈME HYDRAULIQUE DANS UN VÉHICULE AUTOMOBILE

(30) Priority: 08.06.2006 SE 0601267
(43) Date of publication of application: 18.02.2009
(73) Proprietor: Al-Madanat, Nael, 163 66 Spånga (SE)
(72) Inventor: Al-Madanat, Nael, 163 66 Spånga (SE)
(74) Representative: Wibom, Hans Sven-Erik
(86) International application number: PCT/SE2007/000326
(87) International publication number: WO 2007/142570

(56) References cited:
- WO-A1-2004/016487
- DE-A1- 3 935 353
- DE-A1- 4 134 213
- DE-A1- 19 723 435
- DE-U1- 20 015 042
- FR-A- 2 777 249
- US-B1- 6 179 392
- US-B1- 6 796 339

## Description

The invention relates to the use of an arrangement for venting of a hydraulic circuit, particularly a hydraulic brake circuit, in a vehicle, of the kind indicated in the preamble of the attached independent claim.

Hydraulic circuits, particularly hydraulic brake circuits, comprise conventionally a master cylinder which via a pipe system communicates with a number of slave cylinders each arranged to act upon a respective unit, particularly a brake for a motor vehicle, whereby each slave cylinder has a venting nipple comprising an openable and closable venting valve, and the arrangement comprises a receiving vessel with a drain line connectable to a slave cylinder nipple and comprising a check valve which opens towards the receiving vessel.

A problem with previously known venting arrangements is that they rely on the master cylinder and an associated hydraulic fluid storage facility being used for pumping new hydraulic fluid in the system towards the particular slave cylinder being vented. This entails the master cylinder tending to disintegrate during relatively rapid pumping of the master cylinder, i.e. the brake pedal of the brake system.

An object of the invention is therefore to provide an arrangement which reduces the risk of damage to the master cylinder during venting of slave cylinders.

A further object is to provide an arrangement which has two different vessels, namely a vessel which only delivers fresh hydraulic fluid and another vessel which only receives old hydraulic fluid.

A further object of the invention is to propose an arrangement which allows rapid and easy connection of the arrangement and rapid and easy venting of respective slave cylinders.

Further objects and advantages are indicated in the description set out below.

These objects are achieved fully or partly by the invention.

The invention is indicated in the attached independent claim.

Embodiments of the invention are indicated in the attached dependent claims, the description set out below and the attached drawing.

As is defined in claim 1, and with reference to the enclosed drawing, this invention comprises an arrangement for venting of an hydraulic brake circuit for a vehicle 10,20,30, whereby the circuit comprises a master cylinder 10 with a piston acted upon by a brake pedal 60, which master cylinder via a pipe system 20 communicates with a number of slave cylinders 30 each arranged to act upon a respective brake 40 for a vehicle wheel, whereby each slave cylinder 30 has a venting nipple 31 with a closable venting valve 32 and the arrangement comprises a receiving vessel 72 with an associated drain line 73,73' connectable to the nipple and itself comprising a check valve 77 which opens towards the receiving vessel 72. This arrangement is characterised in that the drain line 73,73' has a branch line 75 comprising a check valve 74 which opens towards the nipple 31, and that the branch line 75 is connected to a storage vessel 71 for fresh hydraulic fluid.

The invention comprises the use of said arrangement for the purpose stated in claim 1.

As an example of prior art related to treatment of hydraulic brake cylinders the US patent no. 6 796 339 may be mentioned. Said US patent discloses an elaborate and complicated apparatus for flushing a brake circuit by pumping used hydraulic fluid through the hydraulic circuit in alternating directions for removing impurities and then optionally substituting the old liquid with fresh liquid. This patent also recommends cross-flushing as a method for avoiding engagement of the master cylinder in the treatment of a car brake circuit for flushing and bleeding.

The invention is described below in example form with reference to the attached drawing.

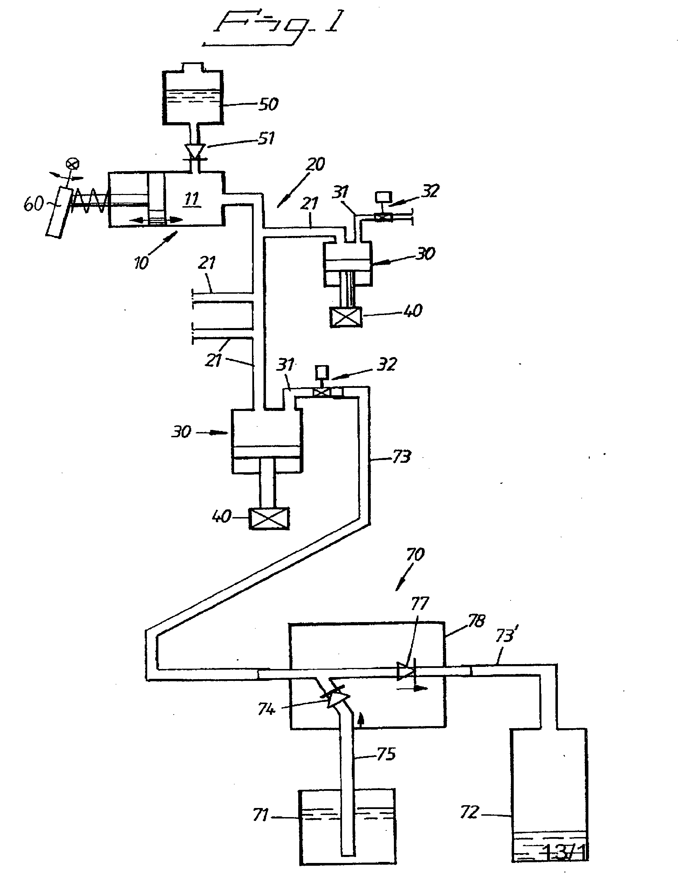

Fig. 1 depicts schematically a hydraulic brake circuit for a vehicle and, connected to it, a venting arrangement.

Fig. 1 depicts a hydraulic brake circuit for a vehicle whereby the circuit comprises a master cylinder 10 whose fluid-filled space 11 communicates with respective slave cylinders 30 via a pipeline system 20 and branch pipes 21. Each slave cylinder 30 may be assumed to have its piston and piston rod connected to an associated running brake 40 for a vehicle wheel.

Each slave cylinder 30 has a nipple 31 which preferably connects to the uppermost part of the portion of the slave cylinder 30 which is filled with fluid. The nipple 31 is illustrated in the form of a pipeline section and comprises a valve 32 which can open and close.

The master cylinder 10 is depicted with an associated storage vessel 50 of hydraulic fluid, which vessel 50 communicates with the fluid space of the master cylinder 10 via a check valve 51 which opens towards the master cylinder 10.

The piston and piston rod of the master cylinder 10 are directly or indirectly connected to a foot-operated brake pedal 60 which is normally loaded towards a state of rest in which the fluid space 11 has its greatest volume.

A venting arrangement 70 for the hydraulic brake circuit comprises a receiving vessel 72 for old brake fluid driven out of the system. A line 73 has its one end portion 73' accommodated in the upper part of the vessel 72 and its other end connected to the free end of the nipple 31. The line 73 is provided with a check valve 77 situated between the end of the line 73 which connects to the vessel 72 and a branch line 75 leading from the line 73. The branch line 75 comprises a check valve 74 which opens towards the line 73. The branch line 75 extends down to the bottom region of a storage vessel 71 containing fresh hydraulic fluid.

The volume of the lines 73, 75 is preferably much smaller than the maximum swept volume of the master cylinder 10. It is also preferable that the check valve 74 be arranged to open at a lower pressure drop than across the check valve 51 between the master cylinder and the storage reservoir 50.

When the line 73 is tightly connected to the nipple 31 and the valve 32 is opened, the piston of the master cylinder is acted upon by, for example, the brake pedal 60, whereby air and possibly also fluid are driven out of the slave cylinder 30 to the receiving vessel 72 via the line 73, 73' and the check valve 77. When the pedal 60 and the piston revert in the master cylinder 10, fresh hydraulic fluid is drawn into the slave cylinder 30 from primarily the storage vessel 71 via the branch line 75 and the check valve 74, the nipple 31 and the valve 32. As there is a relatively large difference in the volume of the chamber 10 as between the extreme positions of the piston, effective replacement of hydraulic fluid in the system by the arrangement 70 involves relatively few pumping operations by the master cylinder 10.

As illustrated in Fig. 1, the two check valves 74, 77 may be fitted in a common equipment housing 78 which may have fixed pipes corresponding to the enclosed portions of the line sections 73 and 75, whereby these pipes have end sections which protrude from the enclosure 78 and to which the arrangement external line portions are connected. These external line portions may be in the form of hoses.

A storage vessel for hydraulic fluid, e.g. the storage vessel 71, may be connected by a hose (not depicted) to the storage vessel 50 of the master cylinder 10 to allow hydraulic fluid to be drawn across to the vessel 50 in order to prevent the fluid level in the vessel 50 from falling below a lower limit value. The hose between the vessels 50 and 71 may have a closable valve (not depicted).

The storage vessel 71 may be situated at a higher level than the storage vessel 50 of the master cylinder 10. The vessels 71, 72, 50 are ventilated in a conventional manner to allow air inflow and outflow in order respectively to prevent below and above atmospheric pressure in these vessels.

## Claims

1. The use of an arrangement for venting of an hydraulic brake slave cylinder in a hydraulic brake circuit for a vehicle (10,20,30), whereby the circuit comprises a master cylinder (10) with a piston acted upon by a brake pedal (60), which master cylinder via a pipe system (20) communicates with a number of slave cylinders (30) each arranged to act upon a respective brake (40) for a vehicle wheel, whereby each slave cylinder (30) has a venting nipple (31) with a closable venting valve (32), and whereby the arrangement comprises an associated drain line (73,73') connected to the nipple and itself comprising a check valve (77) which opens towards an optional receiving vessel (72),wherein the piston of the master cylinder (30) is acted upon by the brake pedal with pumping operations of the master cylinder, whereby air and possibly also fluid are driven out of the slave cylinder (30) via the drain line (73,73') and the check valve (77),
**characterised in that**
the drain line (73,73') has a branch line (75) comprising a check valve (74) which opens towards the nipple (31), and the branch line (75) is connected to a storage vessel (71) for fresh hydraulic fluid, whereby fresh hydraulic fluid is drawn into the slave cylinder (30) from primarily the storage vessel (71) via the branch line (75) and the check valve (74) when the pedal and the piston in the master cylinder revert.

2. The use according to claim 1, wherein the master cylinder (10) is connected to a reservoir (50) for fresh hydraulic fluid which can be drawn into the master cylinder via a check valve (51), **characterised in that** the check valve (74) in the branch line to the storage vessel (71) of fresh hydraulic fluid is arranged to open at a lower pressure difference than the check valve (51) between the master cylibnder and its associated recevoir (50) of hydraulic fluid.

3. The use according to claim 1 or 2, **characterised in that** the check valves (74, 77) belonging to the drain line (73,73') and the branch line (75) are fitted in a common equipment housing (78), optionally with connection of hose sections which provide communication to the slave cylinder's nipple (31) and to the respective storage reservoirs (71,72).

4. The use according to claim 3, **characterised in that** the common equipment housing (78) has fixed pipes with end sections which protrude from the housing (78) and to which the arrangement's external line portions are connected, optionally in the form of hoses.

## Patentansprüche

1. Verwendung einer Anordnung zur Entlüftung eines Hydraulikbremse-Nehmerzylinders in einem Hydraulikbremskreislauf für ein Fahrzeug (10, 20, 30), wodurch der Kreislauf einen Hauptzylinder (10) mit einem Kolben umfasst, auf den mit einem Bremspedal (60) eingewirkt wird, wobei der Hauptzylinder über ein Leitungssystem (20) mit mehreren Nehmerzylindern (30) in Verbindung steht, die jeweils so angeordnet sind, dass sie auf eine jeweilige Bremse (40) für ein Fahrzeugrad einwirken, wodurch jeder Nehmerzylinder (30) einen Entlüftungsnippel (31) mit einem schließbaren Entlüftungsventil (32) aufweist, und wodurch die Anordnung eine zugehörige Ablassleitung (73, 73') umfasst, die mit dem Nippel verbunden ist und selbst ein Rückschlagventil (77) umfasst, das in Richtung eines optionalen Aufnahmegefäßes (72) öffnet, wobei auf den Kolben des Hauptzylinders (30) mit dem Bremspedal eingewirkt wird, mit Pumpvorgängen am Hauptzylinder, wodurch Luft und möglicherweise auch Fluid aus dem Nehmerzylinder (30) über die Ablassleitung (73, 73') und das Rückschlagventil (77) herausgedrückt werden,
**dadurch gekennzeichnet, dass**
die Ablassleitung (73, 73') eine Abzweigleitung (75) aufweist, die ein Rückschlagventil (74) umfasst, das in Richtung des Nippels (31) öffnet, und die Abzweigleitung (75) mit einem Vorratsbehälter (71) für frisches Hydraulikfluid verbunden ist, wodurch frisches Hydraulikfluid aus vorrangig dem Vorratsbehälter (71) über die Abzweigleitung (75) und das Rückschlagventil (74) in den Nehmerzylinder (30) gesaugt wird, wenn sich das Pedal und der Kolben im Hauptzylinder zurückbewegen.

2. Verwendung nach Anspruch 1, wobei der Hauptzylinder (10) mit einem Behälter (50) für frisches Hydraulikfluid verbunden ist, das über ein Rückschlagventil (51) in den Hauptzylinder gesaugt werden kann, **dadurch gekennzeichnet, dass** das Rückschlagventil (74) in der Abzweigungsleitung zum Vorratsbehälter (71) mit frischem Hydraulikfluid so angeordnet ist, dass es bei einem geringeren Druckunterschied öffnet als das Rückschlagventil (51) zwischen dem Hauptzylinder und seinem zugehörigen Behälter (50) mit Hydraulikfluid.

3. Verwendung nach Anspruch 1 oder 2, **dadurch gekennzeichnet, dass** die Rückschlagventile (74, 77), die zu der Ablassleitung (73, 73') und der Abzweigleitung (75) gehören, in einem gemeinsamen Gerätegehäuse (78) eingebaut sind, optional mit dem Anschluss von Schlauchabschnitten, die für die Verbindung zum Nippel (31) des Nehmerzylinders und zu den jeweiligen Speicherbehältern (71, 72) sorgen.

4. Verwendung nach Anspruch 3, **dadurch gekennzeichnet, dass** das gemeinsame Gerätegehäuse (78) feste Leitungen mit Endabschnitten aufweist, die aus dem Gehäuse (78) ragen und mit denen die äußeren Leitungsabschnitte der Anordnung verbunden sind, optional in Form von Schläuchen.

## Revendications

1. Utilisation d'un dispositif de ventilation d'un cylindre récepteur de frein hydraulique dans un circuit de frein hydraulique pour un véhicule (10, 20, 30), le circuit comprenant un maître-cylindre (10) avec un piston actionné par une pédale de frein (60), ledit maître-cylindre communiquant par le biais d'un système de tuyaux (20) avec plusieurs cylindres récepteurs (30) dont chacun est agencé pour agir sur un frein respectif (40) pour une roue de véhicule, chaque cylindre récepteur (30) présentant un raccord de ventilation (31) avec une soupape de ventilation (32) pouvant être fermée, et le dispositif comprenant une conduite de purge (73, 73') associée raccordée au raccord et comprenant elle-même un clapet antiretour (77) qui s'ouvre vers une cuve de réception (72) facultative, le piston du maître-cylindre (30) étant actionné par la pédale de frein, avec des opérations de pompage du maître-cylindre, de l'air et éventuellement aussi du fluide étant évacués hors du cylindre récepteur (30) par le biais de la conduite de purge (73, 73') et du clapet antiretour (77),
**caractérisée en ce que**
la conduite de purge (73, 73') présente une conduite secondaire (75) comprenant un clapet antiretour (74) qui s'ouvre vers le raccord (31), et la conduite secondaire (75) est raccordée à une cuve de stockage (71) pour fluide hydraulique neuf, du fluide hydraulique neuf étant aspiré dans le cylindre récepteur (30) en premier lieu depuis la cuve de stockage (71) par le biais de la conduite secondaire (75) et du clapet antiretour (74) quand la pédale et le piston dans le maître-cylindre reviennent.

2. Utilisation selon la revendication 1, dans laquelle le maître-cylindre (10) est raccordé à un réservoir (50) pour fluide hydraulique neuf qui peut être aspiré dans le maître-cylindre par le biais d'un clapet antiretour (51), **caractérisée en ce que** le clapet antiretour (74) dans la conduite secondaire vers la cuve de stockage (71) de fluide hydraulique neuf est agencé pour s'ouvrir à une différence de pression inférieure au clapet antiretour (51) entre le maître-cylindre et son réservoir associé (50) de fluide hydraulique.

3. Utilisation selon la revendication 1 ou 2, **caractérisée en ce que** les clapets antiretour (74, 77) appartenant à la conduite de purge (73, 73') et la conduite secondaire (75) sont montés dans un boîtier d'équipement commun (78), de manière facultative avec raccordement de sections de flexible qui permettent une communication avec le raccord (31) du cylindre récepteur et les réservoirs de stockage (71, 72) respectifs.

4. Utilisation selon la revendication 3, **caractérisée en ce que** le boîtier d'équipement commun (78) présente des tuyaux fixés avec des sections d'extrémité qui dépassent du boîtier (78) et auxquelles les parties de conduite extérieures du dispositif sont raccordées, de manière facultative sous forme de flexibles.
